# EUROPÄISCHE PATENTSCHRIFT

(11) **EP 3 366 511 B1**
(45) Veröffentlichungstag und Bekanntmachung des Hinweises auf die Patenterteilung: **29.04.2020**
(21) Anmeldenummer: 18153894.3
(22) Anmeldetag: 29.01.2018
(51) Int. Cl.: B60N 2/68

(54) **GURTGESTELL FÜR EINEN FAHRZEUGSITZ ODER EINE FAHRZEUGSITZBANK**
BELT FRAME FOR A VEHICLE SEAT OR A VEHICLE SEAT BENCH
ANCRAGE CEINTURE POUR UN SIÈGE DE VÉHICULE OU UNE BANQUETTE DE VÉHICULE

(30) Priorität: 23.02.2017 DE 102017103778
(43) Veröffentlichungstag der Anmeldung: 29.08.2018
(73) Patentinhaber: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- DE-A1-102006 007 383
- DE-A1-102014 003 966

## Beschreibung

### Stand der Technik

Vorrichtungen zur Anbringung eines Personenrückhaltesystems in einem Verkehrsmittel sind bekannt, beispielsweise zur Anbringung einer Sicherheitsgurtanordnung zur Personensicherung und von Komponenten eines dazugehörigen Personensitzes im Verkehrsmittel.

In Verkehrsmitteln, wie Fahrzeugen, beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar. Ein gattungsgemäßes Gurtgestell ist aus dem Dokument DE 10 2006 007 383 bekannt.

### Aufgabe und Vorteile der Erfindung

Aufgabe der vorliegenden Erfindung ist es, eine Vorrichtung der einleitend beschriebenen Art bzw. eine Personensitzanordnung für ein Fahrzeug technisch und wirtschaftlich vorteilhaft bereitzustellen. Insbesondere sollen Stabilitätskriterien sicher und herstellungstechnisch vorteilhaft erfüllbar sein.

Diese Aufgabe wird durch die unabhängigen Ansprüche gelöst.

In den abhängigen Ansprüchen werden vorteilhafte und zweckmäßige Weiterbildungen der Erfindung genannt.

Die Erfindung geht von einem Gurtgestell für einen Fahrzeugsitz oder eine Fahrzeugsitzbank aus, wobei das Gurtgestell eine Vertikalstütze und eine horizontal verlaufende Querstrebe umfasst, wobei die Querstrebe an der Vertikalstütze angeordnet ist, wobei an einem Anbindungselement der Querstrebe eine Komponente eines Personen-Rückhaltesystems in einem aufgebauten Zustand des Fahrzeugsitz mit Gurtgestell befestigt ist.

Das Gurtgestell umfasst vorteilhafterweise zwei, insbesondere drei Vertikalstützen, wobei die Vertikalstützen beispielsweise voneinander beabstandete vorhanden sind. Bevorugterweise verbindet die Querstrebe die mehreren Vertikalstützen miteinander. Die Vertikalstützen sind vorteilhafterweise voneinander lateral bzw. seitlich bzw. horizontal beabstandet vorhanden. Gegebenenfalls kann im Fußbereich der Vertikalstützen eine Verbindung der Vertikalstützen miteinander vorhanden sein, z.B. durch eine Querstrebe, über welche eine Fixierung am Bodenbereich des Fahrzeugs an der Fahrzeugstruktur einrichtbar ist.

Eine Querstrebe ist vorzugsweise durchgehend ausgebildet und steht bevorzugterweise an der einen oder den mehreren Vertikalstützen horizontal bzw. seitlich über, beispielsweise beidseitig oder einseitig. Demgemäß ist die Querstrebe in der Regel länger als ein Aufstellmaß bzw. ein insbesondere lateraler Abstand von insbesondere zwei Vertikalstützen.

Ein solches Gurtgestell ist insbesondere als Einbauvorrichtung in der Art eines rahmenartigen Gestells ausgebildet, umfassend Freilassungen, die von parallel und winklig zueinander ausgerichteten, miteinander verbundenen, insbesondere länglichen Profilen umrahmt sind. Die Profile bestehen vorzugsweise aus einem metallischen Material.

Beispielsweise umfasst das Gurtgestell auch Anbringmittel zur Anbringung des Gurtgestells an eine Fahrzeugstruktur eines Fahrzeugs im Bereich eines Fahrzeugbodens. Das Gurtgestell ist vorzugsweise derart ausgelegt und ausgebildet, in dem Fahrzeug beziehungsweise in einem Kraftfahrzeug an einem Bodenabschnitt des Fahrzeugs befestigt zu werden. Bevorzugterweise sind die Anbringmittel dazu ausgebildet das Gurtgestell lösbar oder unlösbar fixierbar an der Fahrzeugstruktur, z.B. einem Fahrzeugrahmen, anzubringen. Z.B. ist das Gurtgestell durch die Anbringmittel im angeordneten Zustand am Fahrzeug an die Fahrzeugstruktur angeschraubt und/oder angeschweißt. Die Anbringmittel des Gurtgestells zur Anbringung an eine Fahrzeugstruktur eines Fahrzeugs im Bereich eines Fahrzeugbodens sind beispielsweise am Fußbereich des Gurtgestells ausgebildet.

Das Fahrzeug ist z.B. als ein Automobil, als ein Autobus, als ein Wohnmobil oder auch als ein Camping-Mobil ausgebildet. Das Gurtgestell bildet vorteilhafterweise eine Grundstruktur für eine Sitzanordnung im Fahrzeug, beziehungsweise für eine Fahrzeugsitzanordnung.

Ein Personen-Rückhaltesystem ist vorteilhafterweise als eine Sicherheitsgurtanordnung, z.B. als ein Mehrpunktgurt-Sicherheitssystem oder als Dreipunktgurt-Sicherheitssystem ausgebildet. Am Gurtgestell ist vorzugsweise eine Komponente des Personen-Rückhaltesystems anbringbar. Eine derartige Komponente ist z.B. als ein Gurtaufroller, eine Gurtumlenkanordnung zur Richtungsänderung des daran vorbeigeführten Gurts, eine Fixierung eines Gurtendes oder als ein Gurtschloss, an dem ein Einsteckteil lösbar einrastbar ist, mit welchem der Gurt als Schlaufe ausziehbar ist, vorhanden.

Das vorgeschlagene Gurtgestell muss konstruktiv bzw. mechanisch so ausgelegt sein, um einer maximal tolerierbaren bzw. möglichen Belastung, insbesondere bei dynamischen Belastungsvorgängen, einen ausreichenden Widerstand entgegensetzen zu können, also entsprechende Kräfte und Momente aufzunehmen und weitergeben zu können.

Dies ist Voraussetzung zur Erhaltung der Sicherheit einer Person, welche mit einer Sicherheitsgurtanordnung sicherbar ist, wobei die Sicherheitsgurtanordnung an dem im Fahrzeug fixierten Gurtgestell aufgenommen ist, samt Elementen eines entsprechenden Personensitzes. Das Gurtgestell ist demgemäß vorzugsweise so ausgestaltet, eine innere Gerüststruktur eines fest im Fahrzeug installierten Personensitzes zu bilden.

Für eine vergleichsweise höhere Stabilität des Gurtgestells, z.B. für eine erweiterte Einsatzmöglichkeit auf einen Personensitz mit zwei oder mehr Sitzplätzen, kann das Gurtgestell zum Beispiel genau zwei oder genau drei parallele, z.B. voneinander beabstandete Vertikalstützen umfassen, wobei die Vertikalstützen vorzugsweise identisch aufgebaut sind. Beide Vertikalstützen sind bevorzugt mit einer horizontal angeordneten Querstrebe verbunden.

Bei einem typischen erfindungsgemäßem Gurtgestell mit zwei oder drei senkrecht im Fahrzeug aufstellbaren Vertikalstützen und einer horizontal gerichteten Querstrebe beträgt die Länge der Vertikalstützen bzw. die Höhe des Gurtgestells im montierten Zustand etwa 1,1 Meter bis ca. 1,3 Meter, wobei die Vertikalstützten, insbesondere die beiden äußeren Vertikalstützen, über einen Abstand von z.B. ca. 0,3 bis 0,4 Meter voneinander seitlich beabstandet vorhanden sind. Eine Länge der Querstrebe liegt bevorzugterweise bei ca. 0,7 bis 0,9 Meter.

Die Vertikalstütze und/oder die Querstrebe ist vorteilhafterweise als ein Hohlprofil ausgebildet. Im Querschnitt ist das Hohlprofil typischerweise rechteckig oder quadratisch vorhanden, denkbar ist aber auch, dass das Hohlprofil im Querschnitt rund oder elliptisch ausgebildet ist. Ein typisches Längen- und/oder Breitenmaß bzw. Seitenmaß des Querschnitts des Hohlprofils beträgt ca. 20 bis 40 Millimeter. Eine Wanddicke des Hohlprofils liegt in der Regel in einem einstelligen Millimeterbereich. Denkbar ist auch, dass das Hohlprofil als ein Mehrfachhohlprofil vorhanden ist.

Des Weiteren ist es vorstellbar, dass das Hohlprofil, insbesondere die Vertikalstütze, eine Materialausnehmung z.B. eine Schlitzung aufweist, welche als Soll-Biegestelle im Belastungsfall des angeordneten Gurtgestells, z.B. in einem Crashfall des Fahrzeugs ausgebildet ist. Damit ist ein plastisches Verformungsverhalten der Vertikalstütze in einem Belastungsfall beeinflussbar, insbesondere vorgebbar. Vorteilhafterweise erstreckt sich die Ausnehmung an der Vertikalstützte insbesondere in horizontaler Richtung über eine Vorderseite der Vertikalstütze und über zumindest einen an die Vorderseite anschließenden seitlichen Bereich der Vertikalstütze. Insbesondere erstreckt sich die Materialausnehmung abschnittsweise auf der Vorderseite und auf zwei seitlich an die Vorderseite anschließende sich gegenüberliegende seitliche Bereiche der Vertikalstütze. Die Vorderseite ist bezogen auf einen Anbringzustand des Gurtgestells im Fahrzeug zu verstehen.

Ein mit dem Gurtgestell bildbarer Fahrzeug- bzw. Personensitz weist demgemäß eine Sitzstruktur mit einer Sitzfläche auf, welche sich an der Vorderseite des Personensitzes und damit an der Vorderseite des Gurtgestells bzw. der Vorderseite der Vertikalstütze und/oder einer Vorderseite der Querstrebe befindet, wobei die Vorderseite der Vertikalstütze und die Vorderseite der Querstrebe vorteilhafterweise in Fahrtrichtung F ausgerichtet ist.

Im eingebauten Zustand des Gurtgestells im Fahrzeug entspricht die relevante Belastungsrichtung in der Regel einer Sitzrichtung der gesicherten Person bzw. der Fahrtrichtung F des Fahrzeugs. Bei einem Fahrzeug tritt eine maximale Belastung z.B. bei einem Aufprall des fahrenden Fahrzeugs gegen ein Hindernis auf, einem Crashfall. Aufgrund der abgebremsten Masse der im Fahrzeug sitzenden und gesicherten Person wird über die Sicherheitsgurte des Personenrückhaltesystems eine ruckartig wirkende Zugkraft bzw. ein daraus resultierendes Moment in der Belastungsrichtung bzw. in Fahrtrichtung F am Gurtgestell wirksam.

Ein wesentlicher Aspekt der Erfindung ist nun darin zu sehen, dass das Gurtgestell ein Sicherheitselement umfasst, wobei das Sicherheitselement entlang einer Längsachse der Querstrebe an der Querstrebe vorhanden ist, wobei das Sicherheitselement zusammen mit der Querstrebe die Vertikalstütze umschließt. Hierdurch ist im Crashfall des Fahrzeugs eine Stabilität der Querstrebe vergleichsweise erhöht. Vorteilhafterweise ist hierdurch die Querstrebe mit einem vergleichsweise kleineren Gewicht, insbesondere zusammen mit dem Sicherheitselement, ausbildbar.

Das Sicherheitselement umschließt zusammen mit der Querstrebe die Vertikalstützen insbesondere umfänglich, beispielsweise schlingenartig. Vorteilhafterweise ist eine Längsachse des Sicherheitselements parallel zur Längsachse der Querstrebe ausgebildet. Im montierten Zustand am Gurtgestell ist das Sicherheitselement beispielsweise bananenförmig, z.B. gekrümmt und/oder gebogen vorhanden. Das Sicherheitselement ist beispielsweise an einem rückseitigen Bereich des Gurtgestells vorhanden, wobei der rückseitige Bereich, einem in Fahrtrichtung F weisenden vorderseitigen Bereich des Gurtgestells beabstandet gegenüberliegend vorhanden ist. Das Sicherheitselement ist im angeordneten Zustand am Gurtgestell vorteilhafterweise anliegend an die Vertikalstütze vorhanden, insbesondere anliegend an eine Rückseite der Vertikalstütze.

Überdies ist es von Vorteil, dass an der Querstrebe zwei voneinander beabstandete Befestigungsbereiche vorhanden sind, wobei das Sicherheitselement an den Befestigungsbereichen mit der Querstrebe insbesondere unlösbar verbunden ist. Dadurch kann das Sicherheitselement Zugkräfte, welche z.B. durch die Komponente des Personen-Rückhaltesystems im Crashfall auf die Querstrebe wirken, absorbieren und ggf. weiterleiten.

Bevorzugterweise sind die zwei Befestigungsbereiche, ein erste und ein zweiter Befestigungsbereich, an sich gegenüberliegenden Enden der Querstrebe vorhanden, wobei die Enden der Querstrebe beispielsweise frei abstehend von der Vertikalstütze vorhanden sind. Denkbar ist auch, dass mehr als zwei Befestigungsbereiche, z.B. drei oder vier Befestigungsbereiche, vorhanden sind. Die Befestigungsbereiche sind vorteilhafterweise an einer Rückseite der Querstrebe vorhanden. Die Rückseite der Querstrebe ist der Vorderseite der Querstrebe gegenüberliegend und beabstandet zu dieser vorhanden. Die Rückseite der Querstrebe, insbesondere eine Oberflächennormale der Rückseite der Querstrebe, zeigt im angeordneten Zustand des Gurtgestells am Fahrzeugsitz und/oder am Fahrzeug vorteilhafterweise in Richtung Heck des Fahrzeugs, z.B. entgegengesetzt zur Fahrtrichtung F des Fahrzeugs. Die Vorderseite der Querstrebe zeigt dem entgegengesetzt im angeordneten Zustand des Gurtgestells z.B. in Richtung Fahrzeugfront bzw. in Fahrrichtung F. Bevorzugterweise ist die Querstrebe mit der Rückseite der Querstrebe an der Vorderseite der Vertikalstütze befestigt.

Vorteilhafterweise ist das Sicherheitselement an sich gegenüberliegenden Enden des Sicherheitselements an den Befestigungsbereichen mit der Querstrebe verbunden. Beispielsweise ist das Sicherheitselement ausschließlich mit der Querstrebe verbunden, insbesondere ausschließlich an den Befestigungsbereichen. Das Sicherheitselement ist an den Befestigungsbereichen beispielsweise mit der Querstrebe verschweißt, verschraubt, verlötet, verklebt und/oder vernietet. Vorteilhafterweise besitzt das Sicherheitselement entlang seiner Längsachse einer Länge, welche kleiner ist, als eine Länge der Querstrebe entlang einer Längsachse der Querstrebe.

Weiter wird vorgeschlagen, dass das Sicherheitselement im montierten Zustand des Gurtgestells an einem Fahrzeugsitz und/oder einem Fahrzeug, an einer zur Sitzrichtung des Fahrzeugsitz und/oder zur Fahrtrichtung des Fahrzeugs entgegengesetzten Seite der Querstrebe, beispielsweise an der Rückseite der Querstrebe, vorhanden ist. Vorteilhafterweise ist das Sicherheitselement im angeordneten Zustand des Gurtgestells am Fahrzeugsitz gegenüberliegend zu einer Sitzfläche des Fahrzeugsitzes am Gurtgestell vorhanden. Hierdurch ist das Sicherheitselement derart am Gurtgestell, insbesondere an der Querstrebe vorhanden, dass es Zugkräfte aufnehmen, weiterleiten und/oder absorbieren kann, welche z.B. im Crashfall auf das Gurtgestell und insbesondere auf die Querstrebe wirken. Wobei die Zugkräfte, welche auf die Querstrebe im Crashfall wirken, beispielsweise eine Hauptkraftkomponente in Fahrtrichtung aufweisen. Denkbar ist weiterhin, dass das Sicherheitselement anliegend an der Rückseite der Querstrebe ausgebildet ist, insbesondere in einer horizontalen Erstreckung zwischen dem ersten und/oder dem zweiten Befestigungsbereich und der Vertikalstütze.

Weiter wird vorgeschlagen, dass das Sicherheitselement bandartig ausgebildet ist.

Bevorzugterweise ist das Sicherheitselement als ein Sicherheitsband, z.B. als ein Metallband vorhanden, insbesondere als ein Stahlband. Das Sicherheitselement bzw. das Sicherheitsband ist beispielsweise zwischen 5 und 40 mm, zwischen 5 mm und 30 mm, zwischen 10 mm und 25 mm oder zwischen 10 mm und 20 mm breit. Beispielsweise ist das Sicherheitselement 5 mm, 10 mm, 12 mm, 14 mm, 16 mm, 18 mm, 20 mm, 25 mm, 30 mm, 35 mm oder 40 mm breit, insbesondere 15 mm. Das Sicherheitselement ist z.B. zwischen 0,5 mm und 8 mm, zwischen 1 mm und 6 mm oder zwischen 2 mm und 5 mm dick. Das Sicherheitselement ist z.B. 0,5 mm, 1 mm, 1,5 mm, 2 mm, 2,5 mm, 2,8 mm, 3,2 mm, 3,5 mm oder 4 mm dick, insbesondere ist das Sicherheitselement 3 mm dick. Das Sicherheitselement ist z.B. zwischen 200 mm und 1000 mm lang. Insbesondere ist das Sicherheitselement etwa 640 mm lang. Weiterhin ist es vorstellbar, dass insbesondere die Länge des Sicherheitselements entsprechend der Ausgestaltung des Gurtgestells bzw. der Länge der Querstrebe, insbesondere des Fahrzeugsitz, angepasst ist.

Beispielsweise ist das Sicherheitselement in einer Weise ausgebildet, dass es eine Energie einer zugartigen Kraft, welche an zumindest einem Ende des Sicherheitselements angreift, absorbiert und/oder weiterleitet. Beispielsweise ist das Sicherheitselement derart vorhanden, dass es sich im angeordneten Zustand in einem Crashfall dehnen, strecken und/oder verbiegen kann, wobei das Sicherheitselement in diesem Fall vorteilhafterweise Energie absorbiert. Denkbar ist auch, dass das Sicherheitselement sich im Crashfall verdrillt. Vorstellbar ist weiter, dass das Sicherheitselement, insbesondere entlang seiner Längsachse verdreht bzw. verdrillt vorhanden ist und sich im Crashfall z.B. entdrillt.

Überdies ist es vorteilhaft, dass das Sicherheitselement als Gurtband ausgebildet ist. Hierdurch ist es vergleichsweise leicht und kostengünstig vorhanden. Das Sicherheitselement ist beispielsweise als ein Zugband vorhanden. Z.B. ist das Sicherheitselement streifenartig ausgebildet, z.B. als ein Gewebestreifen. Bevorzugterweise ist das Sicherheitselement, insbesondere das Gurtband in einer Weise stabil vorhanden, dass es eine vergleichsweise hohe Zugkraft, welche insbesondere entlang der Längsachse des Sicherheitselements auf das Sicherheitselement wirkt, aufnehmen und vorteilhaft weiterleiten kann. Beispielsweise ist das Sicherheitselement derart ausgebildet, dass es bei einer vergleichsweise hohen Zugkraft, welche im angeordneten Zustand ggf. in einem Crashfall auf das Sicherheitselement wirkt, nicht reißt und/oder bricht. Das Sicherheitselement ist beispielsweise derart vorhanden, dass es im Crashfall eine Zugkraft, welche auf das Sicherheitselement wirkt, bis zu einem vorgegebenen Kraftbetrag entlang seiner Längsachse weiterleitet und bei überschreiten des vorgegebenen Kraftbetrags durch die Zugkraft beginnt die Zugkraft, insbesondere zusätzlich zur Kraftweiterleitung, zu absorbieren, indem es sich bspw. dehnt.

In einer vorteilhaften Ausgestaltung des Gurtgestells weist das Sicherheitselement entlang seiner Längsachse einen zick-zag-artigen Querschnitt auf. In einer weiteren vorteilhaften Ausgestaltung des Gurtgestells weist das Sicherheitselement entlang seiner Längsachse einen wellenartigen Querschnitt aufweist. Bevorzugterweise ist das Sicherheitselement entlang seiner Längsachse in einem horizontalen Querschnitt zig-zag-artig und/oder wellenartig vorhanden. Überdies erweist es sich als vorteilhaft, dass das Sicherheitselement entlang seiner Längsachse, insbesondere um die Längsachse, gedreht und/oder verdreht ist. Beispielsweise ist das Sicherheitselement entlang seiner Längsachse und um die Längsachse gedrillt. Hierdurch ist das Sicherheitselement in einer Weise ausgebildet, dass es einen vergleichsweise großen Energiebetrag, insbesondere im Crashfall, welcher z.B. durch Zugkräfte auf das Sicherheitselement wirkt, zu absorbieren.

Beispielsweise ist das Sicherheitselement im angeordneten Zustand am Gurtgestell entlang seiner Längsachse in einem Bereich zwischen dem ersten und/oder dem zweiten Befestigungsbereich und der Vertikalstütze wellenartig und/oder zig-zag-artig und/oder verdrillt bzw. verdreht vorhanden. Weiter ist der wellenartige und/oder zig-zag-artige und/oder verdrillte bzw. verdrehte Bereich des Sicherheitselements z.B. beabstandet vom verbleibenden Gurtgestell, insbesondere von der Querstrebe und/oder der Vertikalstütze montiert.

Als vorteilhaft erweist sich weiter, dass im angeordneten Zustand des Gurtgestells am Fahrzeugsitz am Anbindungselement der Querstrebe und/oder am Fahrzeug ein Gurtschloss des Personen-Rückhaltesystems angeordnet ist. Bevorzugterweise ist im angeordneten Zustand am Fahrzeugsitz und/oder am Fahrzeug am Gurtgestell ein Dreipunktsicherheitsgurt-Personen-Rückhaltesystem angeordnet. Das Anbindungselement ist beispielsweise an der Vorderseite der Querstrebe ausgebildet. Das Anbindungselement ist am Gurtgestell bevorzugterweise einem Befestigungsbereich der Querstrebe, insbesondere in einer horizontalen Richtung gesehen, gegenüberliegend vorhanden. Hierdurch ist im angeordneten Zustand eine Zugkraft, z.B. ausgehend vom Sicherheitsgurt des Personen-Rückhaltesystems, insbesondere im Crashfall, über eine Komponente des Personen-Rückhaltesystems, z.B. dem Gurtschloss, auf das Anbindungselement und damit auf die Querstrebe ableitbar. Durch die vorteilhafte Anordnung ist die Zugkraft, welche durch den Sicherheitsgurt wirkt bspw. von der Querstrebe über den Befestigungsbereich auf das Sicherheitselement abgeleitet.

Überdies von Vorteil ist, dass das Sicherheitselement in einem Bereich zwischen zwei vertikal ausgerichteten Verbindungselementen an der Querstrebe vorhanden ist, wobei die Verbindungselemente die Querstrebe, z.B. eine ersten Querstrebe, mit einer weiteren Querstrebe, z.B. einer zweiten Querstrebe, des Gurtgestells verbinden, wobei die weitere Querstrebe derart am Gurtgestell vorhanden ist, dass im angeordneten Zustand des Gurtgestells am Fahrzeugsitz und/oder am Fahrzeug an der weiteren Querstrebe eine Kopfstütze angeordnet ist. Hierdurch ist eine Stabilität des Gurtgestells erhöht. Das Gurtgestell kann ggf. zwei oder mehr vorzugsweise gleichartige Querstreben aufweisen, wobei beispielsweise jede Querstrebe mit der einen Vertikalstütze oder z.B. mit den mehreren Vertikalstützen verbunden ist. Beispielsweise ist an der zweiten Querstütze im angeordneten Zustand des Gurtgestells am Fahrzeugsitz und/oder am Fahrzeug ein Gurtaufroller des Personen-Rückhaltesystems montiert.

Eine weitere vorteilhafte Ausführung der Erfindung ist ein Fahrzeugsitz mit einer der oben genannten Ausführungen des Gurtgestells und/oder ein Fahrzeug, welches ein Gurtgestell nach einer der oben genannten Ausführungen umfasst.

### Beschreibung der Ausführungsbeispiele

Mehrere Ausführungsbeispiele werden anhand der nachstehenden schematischen Zeichnungen unter Angabe weiterer Einzelheiten und Vorteile näher erläutert.

Es zeigen:
- Figur 1: eine perspektivische Ansicht von schräg seitlich hinten oben auf ein erfindungsgemäßes Gurtgestell in einer ersten Variante mit einer ersten Ausführung eines Sicherheitselements,
- Figur 2: das Gurtgestell nach Figur 1 in einer Seitenansicht,
- Figur 3: das Gurtgestell nach Figur 1 in eine Hinteransicht,
- Figur 4: eine Schnittansicht A-A des Gurtgestells nach Figur 3 von oben,
- Figur 5: eine vergrößerte Detailansicht B des Schnitts A-A nach Figur 4 und
- Figuren 6 bis 8: eine vergrößerte Detailansicht B auf weitere Varianten eines Gurtgestells, entsprechend des Schnitts A-A durch die erste Variante des Gurtgestells nach Figur 4, mit weiteren zur Ausführung nach Figur 1 verschiedenen Ausführungsvarianten eines Sicherheitselements.

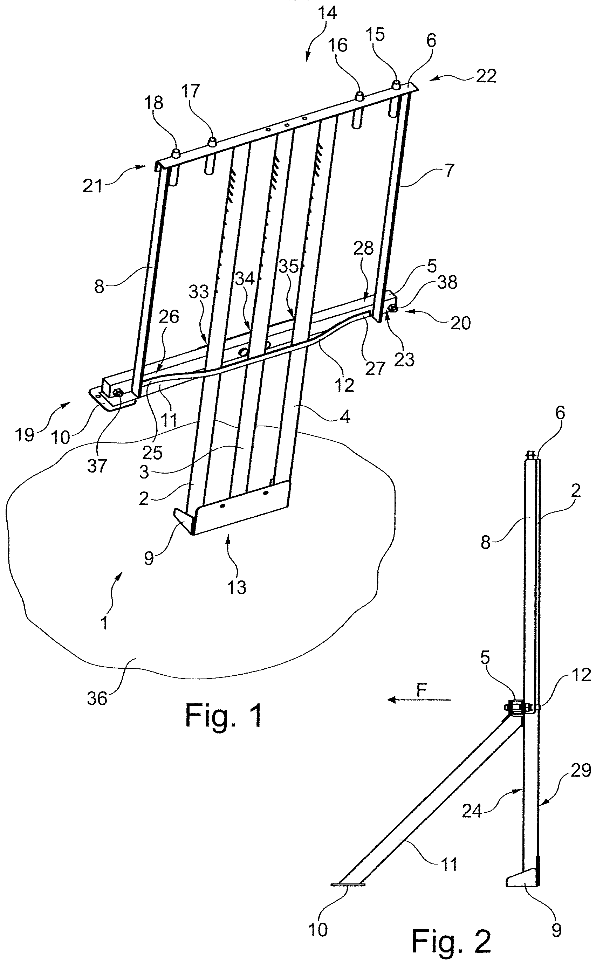

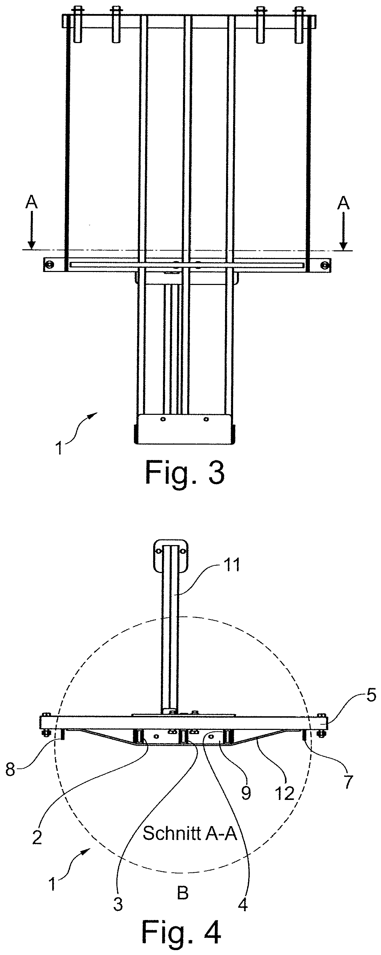

Ein erfindungsgemäßes Grundgestell 1 umfasst unter anderem drei Vertikalstützen 2 - 4, eine erste Querstrebe 5 und eine zweite Querstrebe 6, zwei Verbindungselemente 7, 8, ein Anbringmittel 9, 10, einen Stützfuß 11, sowie ein Sicherheitselement in Form eines Sicherheitsbands 12 (Figuren 1 bis 5).

Längsachsen der drei Vertikalstützen 2 - 4 sind im angeordneten Zustand am Grundgestell 1 vertikal ausgerichtet vorhanden. Die Vertikalstützen 2 - 4 sind beabstandet voneinander und beispielsweise parallel zueinander nebeneinander vorhanden. Im Fußbereich 13 der Vertikalstützen 2 - 4 sind Anbringmittel 9 vorgesehen, um die Vertikalstützen 2 - 4 im angeordneten Zustand an einem Fahrzeug (nicht dargestellt) zu befestigen, zum Beispiel an einem Fahrzeugboden 36 anzuschrauben. Vorteilhaft senkrecht zu den Vertikalstützen 2 - 4 sind die Querstreben 5, 6 vorhanden und bevorzugterweise mit jeder der Vertikalstützen 2 - 4 insbesondere unlösbar verbunden. Beispielsweise sind die Querstreben 5, 6 an Verbindungsstellen 33 - 35 an die Vertikalstützen 2 - 4 angeschweißt. Denkbar ist auch, dass die Querstreben 5, 6 mit den Vertikalstützen 2 - 4 verschraubt und/oder vernietet sind. Vorteilhafterweise ist die erste Querstrebe 5 mit einer Rückseite 23 an einer Vorderseite 24 der Vertikalstütze 2 - 4 montiert. Eine Oberflächennormale der Vorderseite 24 der Vertikalstützen 2 - 4 zeigt vorteilhafterhweise im angeordneten Zustand des Gurtgestells 1 am Fahrzeug in eine Fahrtrichtung F des Fahrzeugs, insbesondere in Richtung Fahrzeugfront.

Die zweite Querstrebe 6 ist beispielsweise an einem Kopfbereich 14 an einer der Vertikalstützen 2 - 4 oder an jeder der Vertikalstützen 2 - 4 angeordnet. An der zweiten Querstrebe 6 sind Montagemittel 15 - 18 ausgebildet, welche dazu vorgesehen sind, z.B. jeweils paarweise eine Kopfstütze (nicht dargestellt) anzuordnen.

Die erste Querstrebe 5 ist vorteilhafterweise etwa auf Höhe einer Sitzfläche eines Fahrzeugsitz an den Vertikalstützen 2 - 4 befestigt, wobei der Fahrzeugsitz das Grundgestell 1 umfasst. Insbesondere ist die erste Querstrebe 5 ausgehend von den Anbringmittel 9 in vertikaler Richtung nach oben auf Höhe eines Drittels einer Länge der Vertikalstützen 2 - 4 ausgebildet.

Die Verbindungselemente 7, 8 sind beispielsweise bandartig vorhanden, z.B. als ein Stahlband. Die Verbindungselemente 7, 8 verbinden die erste Querstrebe 5 und die zweite Querstrebe 6 miteinander. Vorteilhafterweise sind die Verbindungselemente 7, 8 mit den Querstreben 5, 6 unlösbar verbunden, z.B. verschweißt. Die Verbindungselemente 7, 8 sind bspw. parallel zu den Vertikalstützen 2 - 4 ausgerichtet vorhanden und erstrecken sich z.B. in vertikaler Richtung. Vorteilhafterweise sind die Verbindungselemente 7, 8 dazu vorgesehen die Querstreben 5, 6 insbesondere in einem Crashfall in einem definierten z.B. vertikalen Abstand zueinander zu halten. Bevorzugterweise verbinden die Verbindungselemente 7, 8 Enden 19 - 22 der Querstreben 5, 6 miteinander.

Das Sicherheitsband 12 ist bevorzugterweise an der Rückseite 23 der ersten Querstrebe 5 befestigt. Beispeilsweise ist das Sicherheitsband 12 mit einem ersten Ende 25 an einem ersten Befestigungsbereich 26 der ersten Querstrebe 5 und mit einem zweiten Ende 27 an einem zweiten Befestigungsbereich 28 der ersten Querstrebe 5 angeordnet. Vorteilhafterweise ist das Sicherheitsband 12 mit seiner Längsachse parallel zur ersten Querstrebe 5 entlang einer Längsachse der ersten Querstrebe 5 verlaufend vorhanden, sodass die erste Querstrebe 5 zusammen mit dem Sicherheitsband 12 in einer insbesondere horizontalen Ebene die Vertikalstützen 2 - 4 z.B. schlingenartig umschließen. Die Enden 25, 27 des Sicherheitsbands 12 sind im angeordneten Zustand des Sicherheitsbands 12 am Gurtgestell 1 vorteilhafterweise zwischen den voneinander beabstandet vorhandenen Verbindungselementen 7, 8 an der ersten Querstrebe 5 befestigt. Beispielsweise sind am ersten Befestigungsbereich 26 das Verbindungselement 8 und das erste Ende 25 des Sicherheitsbands 12 und am zweiten Befestigungsbereich 28 das Verbindungselement 7 und das zweite Ende 27 des Sicherheitsbands 12 nebeneinander an der ersten Querstrebe 5 fixiert. Das Sicherheitsband 12 ist vorteilhafterweise anliegend an eine Rückseite 29 der Vertikalstützen 2 - 4 ausgebildet.

Weiterhin sind an Enden 19, 20 der ersten Querstrebe 5 Anbringmittel in Form einer Befestigungsschraube 37, 38 ausgebildet. An den Befestigungsschrauben 37, 38 ist im angeordneten Zustand des Gurtgestells 1 am Fahrzeugsitz eine Sicherheitskomponente eines Personenrückhaltesystems befestigt, z.B. ein Gurtschloss.

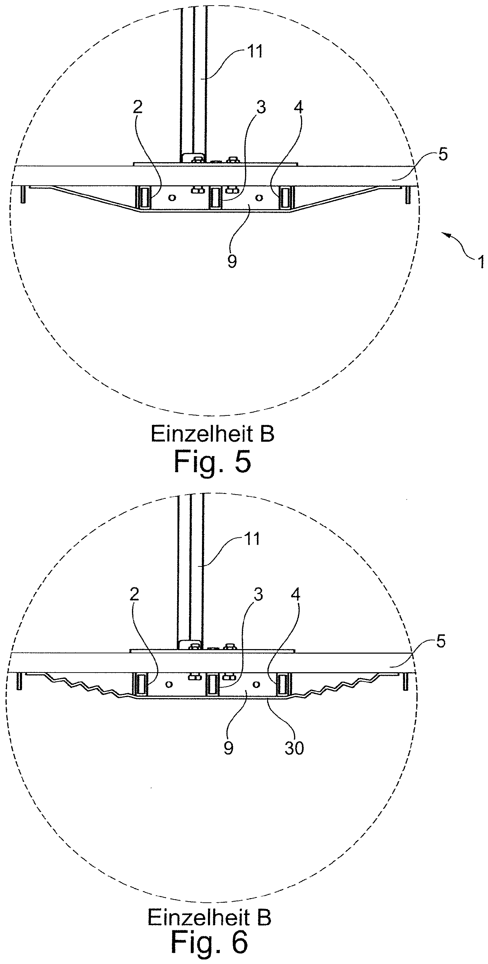

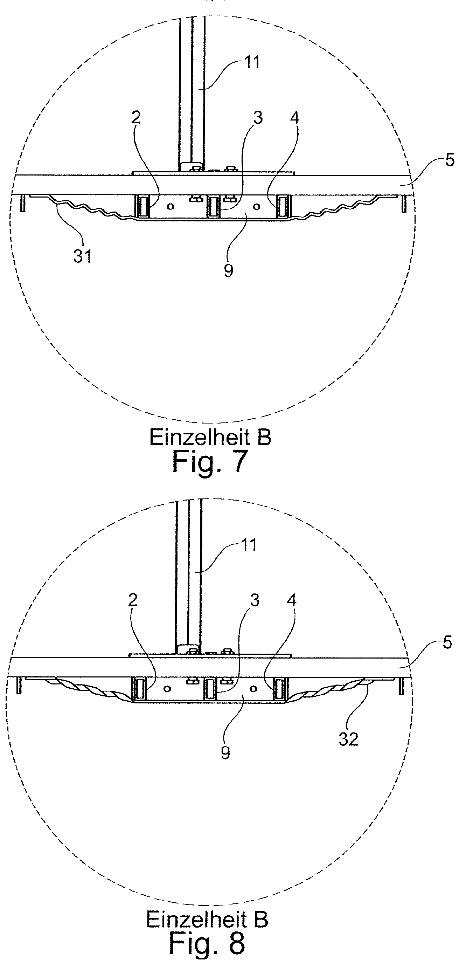

In den Figuren 6 bis 8 sind weitere Varianten eines Sicherheitselement in Form eines Sicherheitsbands 30, welches im Querschnitt entlang seiner Längsachse einen zick-zackartigen Verlauf aufweist (Figur 6), in Form eines Sicherheitsbands 31, welches im Querschnitt entlang seiner Längsachse einen wellenartigen Verlauf aufweist (Figur 7) und in Form eines Sicherheitsbands 32, welches entlang seiner Längsachse einen gedrillten bzw. verdrehten Verlauf aufweist (Figur 8).

### Bezugszeichenliste

- 1: Gurtgestell
- 2 - 4: Vertikalstütze
- 5 - 6: Querstrebe
- 7 - 8: Verbindungselement
- 9 - 10: Anbringmittel
- 11: Stützfuß
- 12: Band
- 13: Fußbereich
- 14: Kopfbereich
- 15 - 18: Montagemitteln
- 19 - 22: Ende
- 23: Rückseite
- 24: Vorderseite
- 25, 27: Ende
- 26, 28: Befestigungsbereich
- 29: Rückseite
- 30 - 32: Sicherheitsband
- 33 - 35: Verbindungsstelle
- 36: Fahrzeugboden
- 37, 38: Befestigungsschraube

## Patentansprüche

1. Gurtgestell (1) für einen Fahrzeugsitz oder eine Fahrzeugsitzbank, wobei das Gurtgestell (1) eine Vertikalstütze (2 - 4) und eine horizontal verlaufende Querstrebe (5) umfasst, wobei die Querstrebe (5) an der Vertikalstütze (2 - 4) angeordnet ist, wobei an einem Anbindungselement der Querstrebe (5) eine Komponente eines Personen-Rückhaltesystems in einem aufgebauten Zustand des Fahrzeugsitz mit Gurtgestell (1) befestigt ist, **dadurch gekennzeichnet, dass** das Gurtgestell (1) ein Sicherheitselement (12) umfasst, wobei das Sicherheitselement (12) entlang einer Längsachse der Querstrebe (5) an der Querstrebe (5) vorhanden ist, wobei das Sicherheitselement (12) zusammen mit der Querstrebe (5) die Vertikalstütze (2 - 4) umschließt.

2. Gurtgestell (1) für einen Fahrzeugsitz nach dem vorangegangenen Anspruch 1, **dadurch gekennzeichnet, dass** an der Querstrebe (5) zwei voneinander beabstandete Befestigungsbereiche (26, 28) vorhanden sind, wobei das Sicherheitselement (12) an den Befestigungsbereichen (26, 28) mit der Querstrebe (5) insbesondere unlösbar verbunden ist.

3. Gurtgestell (1) für einen Fahrzeugsitz nach einem der vorangegangenen Ansprüche, **dadurch gekennzeichnet, dass** das Sicherheitselement (12) im montierten Zustand des Gurtgestells (1) an einem Fahrzeugsitz und/oder einem Fahrzeug, an einer zur Sitzrichtung F des Fahrzeugsitz und/oder zur Fahrtrichtung des Fahrzeugs entgegengesetzten Seite (23) der Querstrebe (5) vorhanden ist.

4. Gurtgestell (1) für einen Fahrzeugsitz nach einem der vorangegangenen Ansprüche, **dadurch gekennzeichnet, dass** das Sicherheitselement (12, 30 - 32) bandartig ausgebildet ist.

5. Gurtgestell (1) für einen Fahrzeugsitz nach einem der vorangegangenen Ansprüche, **dadurch gekennzeichnet, dass** das Sicherheitselement (12) als Gurtband ausgebildet ist.

6. Gurtgestell (1) für einen Fahrzeugsitz nach einem der vorangegangenen Ansprüche, **dadurch gekennzeichnet, dass** das Sicherheitselement (30) entlang seiner Längsachse einen zick-zag-artigen Querschnitt aufweist.

7. Gurtgestell (1) für einen Fahrzeugsitz nach einem der vorangegangenen Ansprüche, **dadurch gekennzeichnet, dass** das Sicherheitselement (31) entlang seiner Längsachse einen wellenartigen Querschnitt aufweist.

8. Gurtgestell (1) für einen Fahrzeugsitz nach einem der vorangegangenen Ansprüche, **dadurch gekennzeichnet, dass** das Sicherheitselement (32) entlang seiner Längsachse, insbesondere um die Längsachse, gedreht und/oder verdreht ist.

9. Gurtgestell (1) für einen Fahrzeugsitz nach einem der vorangegangenen Ansprüche, **dadurch gekennzeichnet, dass** im angeordneten Zustand des Gurtgestells (1) am Fahrzeugsitz am Anbindungselement der Querstrebe (5) und/oder am Fahrzeug ein Gurtschloss des Personen-Rückhaltesystems angeordnet ist.

10. Gurtgestell (1) für einen Fahrzeugsitz nach einem der vorangegangenen Ansprüche, **dadurch gekennzeichnet, dass** das Sicherheitselement (12, 30 - 32) in einem Bereich zwischen zwei vertikal ausgerichteten Verbindungselementen (7, 8) an der Querstrebe (5) vorhanden ist, wobei die Verbindungselemente (7, 8) die Querstrebe (5) mit einer weiteren Querstrebe (6) des Gurtgestells (1) verbinden, wobei die weitere Querstrebe (6) derart am Gurtgestell (1) vorhanden ist, dass im angeordneten Zustand des Gurtgestells (1) am Fahrzeugsitz und/oder am Fahrzeug an der weiteren Querstrebe (6) eine Kopfstütze angeordnet ist.

11. Fahrzeugsitz mit einem Gurtgestell (1) nach einem der vorangegangenen Ansprüche.

12. Fahrzeug mit einem Fahrzeugsitz nach dem vorangegangenen Anspruch 11 und/oder einem Gurtgestell (1) nach einem der vorangegangen Ansprüche 1 bis 10.

## Claims

1. Belt frame (1) for a vehicle seat or a vehicle seat bench, wherein the belt frame (1) comprises a vertical support (2 - 4) and a horizontal cross member (5), wherein the cross member (5) is arranged on the vertical support (2 - 4), wherein on an attachment element of the cross member (5) a component of a passenger restraint system in an assembled state of the vehicle seat is fastened to the belt frame (1), **characterised in that** the belt frame (1) comprises a safety element (12), wherein the safety element (12) is provided along a longitudinal axis of the cross member (5) on the cross member (5), wherein the safety element (12) together with the cross member (5) surrounds the vertical support (2 - 4).

2. Belt frame (1) for a vehicle seat according to the preceding claim 1, **characterised in that** on the cross member (5) two spaced apart fastening areas (26, 28) are provided, wherein the safety element (12) is connected at the fastening areas (26, 28) to the cross member (5), in particular in a non-detachable manner.

3. Belt frame (1) for a vehicle seat according to any of the preceding claims, **characterised in that** the safety element (12) is provided in the mounted state of the belt frame (1) on a vehicle seat and/or a vehicle, on a side (23) of the cross member (5) opposite the sitting direction F of the vehicle seat and/or the travelling direction of the vehicle.

4. Belt frame (1) for a vehicle seat according to any of the preceding claims, **characterised in that** the safety element (12, 30 - 32) is designed to be strap-like.

5. Belt frame (1) for a vehicle seat according to any of the preceding claims, **characterised in that** the safety element (12) is designed as a strap.

6. Belt frame (1) for a vehicle seat according to any of the preceding claims, **characterised in that** the safety element (30) has a zig-zag-like cross-section along its longitudinal axis.

7. Belt frame (1) for a vehicle seat according to any of the preceding claims, **characterised in that** the safety element (31) has a wave-like cross-section along its longitudinal axis.

8. Belt frame (1) for a vehicle seat according to any of the preceding claims, **characterised in that** the safety element (32) is rotated and/or twisted along its longitudinal axis, in particular about the longitudinal axis.

9. Belt frame (1) for a vehicle seat according to any of the preceding claims, **characterised in that** in the arranged state of the belt frame (1) on the vehicle seat a seatbelt buckle of the passenger restraint system is arranged on the attachment element of the cross member (5) and/or on the vehicle.

10. Belt frame (1) for a vehicle seat according to any of the preceding claims, **characterised in that** the safety element (12, 30 - 32) is provided in an area between two vertically aligned connecting elements (7, 8) on the cross member (5), wherein the connecting elements (7, 8) connect the cross member (5) to a further cross member (6) of the belt frame (1), wherein the additional cross member (6) is provided on the belt frame (1) such that in the arranged state of the belt frame (1) on the vehicle seat and/or on the vehicle a head support is arranged on the additional cross member (6).

11. Vehicle seat with a belt frame (1) according to any of the preceding claims.

12. Vehicle with a vehicle seat according to the preceding claim 11 and/or a belt frame (1) according to any of the preceding claims 1 to 10.

## Revendications

1. Cadre de ceinture (1) pour un siège de véhicule ou une banquette de véhicule, le cadre de ceinture (1) comprenant un support vertical (2 - 4) et une entretoise (5) s'étendant horizontalement, l'entretoise (5) étant disposée sur le support vertical (2 - 4), un composant d'un système de retenue de personnes étant fixé à un élément de liaison de l'entretoise (5) lorsque le siège de véhicule avec cadre de ceinture (1) est monté, **caractérisé en ce que** le cadre de ceinture (1) comprend un élément de sécurité (12), ledit élément de sécurité (12) étant présent sur l'entretoise (5) le long d'un axe longitudinal de l'entretoise (5), l'élément de sécurité (12) entourant avec l'entretoise (5) le support vertical (2 - 4).

2. Cadre de ceinture (1) pour un siège de véhicule selon la revendication 1 précédente, **caractérisé en ce que** deux zones de fixation (26, 28) espacées l'une de l'autre sont présentes sur l'entretoise (5), l'élément de sécurité (12) étant relié à l'entretoise (5), en particulier de manière inséparable, au niveau des zones de fixation (26, 28).

3. Cadre de ceinture (1) pour un siège de véhicule selon l'une des revendications précédentes, **caractérisé en ce que** l'élément de sécurité (12) est présent, à l'état monté du cadre de ceinture (1) sur un siège de véhicule et/ou sur un véhicule, sur un côté (23) de l'entretoise (5) opposé à la direction d'assise F du siège de véhicule et/ou à la direction de déplacement du véhicule.

4. Cadre de ceinture (1) pour un siège de véhicule selon l'une des revendications précédentes, **caractérisé en ce que** l'élément de sécurité (12, 30 - 32) est conçu sous la forme d'une bande.

5. Cadre de ceinture (1) pour un siège de véhicule selon l'une des revendications précédentes, **caractérisé en ce que** l'élément de sécurité (12) est conçu sous la forme d'une sangle.

6. Cadre de ceinture (1) pour un siège de véhicule selon l'une des revendications précédentes, **caractérisée en ce que** l'élément de sécurité (30) présente une section transversale en zigzag le long de son axe longitudinal.

7. Cadre de ceinture (1) pour un siège de véhicule selon l'une des revendications précédentes, **caractérisée en ce que** l'élément de sécurité (31) présente une section transversale ondulée le long de son axe longitudinal.

8. Cadre de ceinture (1) pour un siège de véhicule selon l'une des revendications précédentes, **caractérisé en ce que** l'élément de sécurité (32) est tourné et/ou tordu le long de son axe longitudinal, en particulier autour de l'axe longitudinal.

9. Cadre de ceinture (1) pour un siège de véhicule selon l'une des revendications précédentes, **caractérisé en ce que,** lorsque le cadre de ceinture (1) est placé sur le siège de véhicule, un boitier de verrouillage du système de retenue de personne est disposé sur l'élément de liaison de l'entretoise (5) et/ou sur le véhicule.

10. Cadre de ceinture (1) pour un siège de véhicule selon l'une des revendications précédentes, **caractérisée en ce que** l'élément de sécurité (12, 30 - 32) est présent sur l'entretoise (5), dans une zone située entre deux éléments de liaison (7, 8) orientés verticalement, lesdits éléments de liaison (7, 8) reliant l'entretoise (5) à une entretoise supplémentaire (6) du cadre de ceinture (1), l'entretoise supplémentaire (6) étant présente sur le cadre de ceinture (1) de telle sorte que, lorsque le cadre de ceinture (1) est placé sur le siège de véhicule et/ou sur le véhicule, un appuie-tête soit disposé sur l'entretoise supplémentaire (6).

11. Siège de véhicule avec une cadre de ceinture (1) selon l'une des revendications précédentes.

12. Véhicule avec un siège de véhicule selon la revendication précédente 11 et/ou avec un cadre de ceinture (1) selon l'une des revendications précédentes 1 à 10.
